# EUROPÄISCHE PATENTANMELDUNG

(11) **EP 4 147 911 A1**
(43) Veröffentlichungstag der Anmeldung: **15.03.2023**
(21) Anmeldenummer: 22193350.0
(22) Anmeldetag: 31.08.2022
(51) Int. Cl.: B60P 3/34

(54) **FREIZEITFAHRZEUG, INSBESONDERE WOHNMOBIL ODER WOHNWAGEN, UND RAUMERWEITERUNG**

(30) Priorität: 12.09.2021 DE 102021123568
(71) Anmelder: Erwin Hymer Group SE, 88339 Bad Waldsee (DE)
(72) Erfinder: Dr. Rüdiger Freimann, 88436 Eberhardzell (DE); Jens Döring, 88339 Bad Waldsee (DE)
(74) Vertreter: Waller, Stefan

(57) **Zusammenfassung**

Raumerweiterung (2) für ein Freizeitfahrzeug (1), insbesondere für ein Wohnmobil oder einen Wohnwagen, mit einem ausfahrbaren Element (3) und zumindest einer Seitenwand (4, 5), wobei die Seitenwand (4, 5) mit dem ausfahrbaren Element (3) verbunden ist. Vorgeschlagen wird, dass die Seitenwand (4, 5) als flexible Seitenwand (4, 5) ausgebildet ist, dass zumindest eine Spindel (6, 7) vorgesehen ist, dass die Seitenwand (4, 5) in einem Ausgangszustand, in dem das ausfahrbare Element (3) eingefahren ist, zumindest im Wesentlichen an der Spindel (6, 7) eingerollt ist und dass bei einem Verstellen des ausfahrbaren Elements (3) aus einem ausgefahren Zustand, in dem das ausfahrbare Element (3) ausgefahren ist, in den Ausgangszustand die Spindel (6, 7) die Seitenwand (4, 5) einrollt. Ferner ist ein Freizeitfahrzeug (1) mit solch einer Raumerweiterung (2) angegeben.

## Beschreibung

Die Erfindung betrifft ein Freizeitfahrzeug, insbesondere ein Wohnmobil oder einen Wohnwagen, mit zumindest einer Raumerweiterung.

Aus der CN 211493816 U ist eine Raumerweiterung für ein Wohnmobil bekannt. Die bekannte Raumerweiterung weist eine hintere Platte und Seitenplatten auf. Außerdem ist eine oben angeordnete, elektrisch betätigte Verstellstange vorgesehen, die unter anderem die hintere Platte ausfährt, so dass eine Nutzung zum Schlafen möglich ist. Über die Verstellstange erfolgt auch ein Einfahren. Die starren Seitenplatten sind klappbar ausgeführt, um den Platzbedarf im eingefahrenen Zustand zu verringern.

Die aus der CN 211493816 U bekannte Raumerweiterung hat den Nachteil, dass die Ausgestaltung aufwändig ist, da insbesondere die starren Seitenplatten zusammenklappbar ausgeführt sind.

Der vorliegenden Erfindung liegt die Aufgabe zugrunde, ein Raumerweiterung und ein Freizeitfahrzeug mit einer Raumerweiterung anzugeben, die verbessert ausgestaltet sind.

Diese Aufgabe wird durch ein Raumerweiterung mit den Merkmalen des unabhängigen Patentanspruchs 1 und durch eine Freizeitfahrzeug mit den Merkmalen des unabhängigen Patentanspruchs 11 gelöst. Vorteilhafte Weiterbildungen der Erfindung sind in den Unteransprüchen angegeben.

Die Aufgabe wird durch eine Raumerweiterung für ein Freizeitfahrzeug, insbesondere für ein Wohnmobil oder einen Wohnwagen, mit einem ausfahrbaren Element und zumindest einer Seitenwand gelöst, wobei die Seitenwand mit dem ausfahrbaren Element verbunden ist, wobei die Seitenwand als flexible Seitenwand ausgebildet ist, wobei zumindest eine Spindel vorgesehen ist, wobei die Seitenwand in einem Ausgangszustand, in dem das ausfahrbare Element eingefahren ist, zumindest im Wesentlichen an der Spindel eingerollt ist und wobei bei einem Verstellen des ausfahrbaren Elements aus einem ausgefahren Zustand, in dem das ausfahrbare Element ausgefahren ist, in den Ausgangszustand die Spindel die Seitenwand einrollt.

Ferner wird die Aufgabe durch ein Freizeitfahrzeug mit solch einer Raumerweiterung gelöst.

Vorteilhaft ist es, dass bei dem Verstellen des ausfahrbaren Elements aus dem ausgefahren Zustand in den Ausgangszustand die Spindel das ausfahrbare Element mittels der Seitenwand betätigt. Hierdurch kann der Vorgang des Einziehens der Raumerweiterung über die Spindel realisiert werden.

Vorteilhaft ist es, dass die Spindel zumindest näherungsweise mittig zwischen dem ausfahrbaren Element und einem Rahmen angeordnet ist und/oder dass bei einem Verstellen des ausfahrbaren Elements aus einem ausgefahren Zustand in den Ausgangszustand die Spindel die Seitenwand an zwei Seiten der Spindel einrollt. Dabei kann die Spindel dann immer den halben Weg zurücklegen wie das ausfahrbare Element. Das ausfahrbare Element kann im Ausgangszustand ein Teil der Außenwand beziehungsweise der Aufbauwand des Freizeitfahrzeugs bilden.

Vorteilhaft ist es, dass die Spindel bei einem Verstellen des ausfahrbaren Elements aus einem ausgefahren Zustand in den Ausgangszustand beziehungsweise aus dem Ausgangszustand in den ausgefahrenen Zustand mittels einer Teleskopmechanik so betätigbar ist, dass die Spindel zumindest näherungsweise mittig zwischen dem ausfahrbaren Element und dem Rahmen angeordnet ist. Hierdurch kann dafür gesorgt werden, dass die Spindel immer exakt den halben Weg des ausfahrbaren Elements zurücklegt.

Vorteilhaft ist es, dass die Spindel mittels der Teleskopmechanik gleichmäßig verstellbar ist. Hierdurch kann ein Verkanten der Führung beim Ein- und Ausfahren verhindert werden.

Vorteilhaft ist es, dass die Spindel an zumindest einem Ende an einer vorzugsweise linear geführten Platte, insbesondere Fußbodenplatte, gelagert ist. Diese Platte kann zugleich das ausfahrbare Element tragen. Somit können die Spindel und das ausfahrbare Element vorteilhaft abgestützt werden.

Vorteilhaft ist es, dass die Seitenwand als aufblasbare Seitenwand ausgebildet ist und dass das ausfahrbare Element bei einer Verstellung aus dem Ausgangszustand in den ausgefahrenen Zustand durch Aufblasen der Seitenwand verstellbar ist. Durch eine aufblasbare Ausgestaltung der Seitenwand kann beispielsweise eine Wärmeisolierung realisiert werden. Ferner kann auch eine Betätigung der Raumerweiterung realisiert werden, indem die Seitenwand aufgeblasen wird. Zum Einfahren kann dann die Luft durch das Einrollen verdrängt und/oder abgesaugt werden.

Vorteilhaft ist es, dass die Spindel als angetriebene Spindel ausgebildet ist. Hierdurch kann der Auf- und Abbau durch eine Person unterstützt werden oder auch selbsttätig ablaufen. Vorteilhaft ist es, dass die Seitenwand in dem ausgefahren Zustand zumindest im Wesentlichen gestreckt ist. Hierdurch ergibt sich eine optimierte Nutzbarkeit.

Vorteilhaft ist es, dass zumindest eine weitere Seitenwand und zumindest eine weitere Spindel vorgesehen sind, dass die Spindel und die weitere Spindel zumindest näherungsweise parallel zueinander angeordnet sind, dass die weitere Seitenwand in dem Ausgangszustand zumindest im Wesentlichen an der weiteren Spindel eingerollt ist und dass bei einem Verstellen des ausfahrbaren Elements aus dem ausgefahren Zustand in den Ausgangszustand die Spindel die Seitenwand und die weitere Spindel die weitere Seitenwand zumindest näherungsweise simultan zueinander einrollen. Insbesondere können dann die beiden Seitenwände, die sich vertikal erstrecken, in vorteilhafter Weise realisiert werden. Oben und unten können gegebenenfalls ausfahrbare Platten vorgesehen sein. Insbesondere oben kann aber auch eine weitere flexible Seitenwand vorgesehen sein. Unten ist vorzugsweise eine Platte vorgesehen, um ein Betreten der Raumerweiterung zu ermöglichen.

Die Spindeln können angetrieben sein und/oder gleichsinnig mit der Raumerweiterung laufen. Dadurch wird insbesondere beim Einfahren der Stoff der Seitenwände gleichmäßig aufgerollt. Der Stoff kann somit ohne Beschädigung gleichmäßig aufgerollt werden. Das System erhält dadurch eine deutlich verbesserte Lebensdauer.

Werden die Stoffbahnen an dem ausfahrbaren Element (Außenwandteil) und der Anbindung zur Aufbauwand luftdicht angebunden, dann kann der Ausschub der Raumerweiterung durch Luftdruck erfolgen. Der Einzug kann durch Aufrollen erfolgen. Die Teleskopführung stellt dabei vorzugsweise in Verbindung mit den Rollspindeln einen gleichmäßigen Verfahrweg sicher und verhindert somit ein Verkanten der Führung beim Ein- und Ausfahren.

Spindeln können auch auf Dach und Boden, insbesondere entsprechend einer Schubladenführung, zur Führung der Raumerweiterung (Push-out) genutzt werden. Dann kann der gesamte Push-out vollständig, also rundherum, abgedichtet werden und insbesondere an dem Außenwandteil und der Aufbauwand verklebt und somit aufgeblasen werden, ohne dass die Stoffbahnen der Seitenwände unkontrolliert falten.

Die Spinden der Seiten und gegebenenfalls von Boden und/oder oberer Wand können mit Gelenken verbunden sein und über einen zentralen Antrieb angetrieben werden. Zumindest eine Spindel und gegebenenfalls die einzige Spindel kann auch als flexibler, umlaufender Stab ausgeführt sein und zentral angetrieben werden.

Weitere Vorteile und Einzelheiten der Erfindung werden anhand des in den schematischen Figuren dargestellten Ausführungsbeispiels näher erläutert. Hierbei zeigt:
- Fig. 1: ein Freizeitfahrzeug mit einer Raumerweiterung entsprechend einem möglichen Ausführungsbeispiel in einer schematischen, auszugsweisen Ansicht von oben;
- Fig. 2: ein Freizeitfahrzeug mit einer Raumerweiterung entsprechend einem möglichen Ausführungsbeispiel in einer schematischen, auszugsweisen Ansicht von der Seite im Ausgangszustand und
- Fig. 3: den in Fig. 2 dargestellten Ausschnitt im ausgefahrenen Zustand.

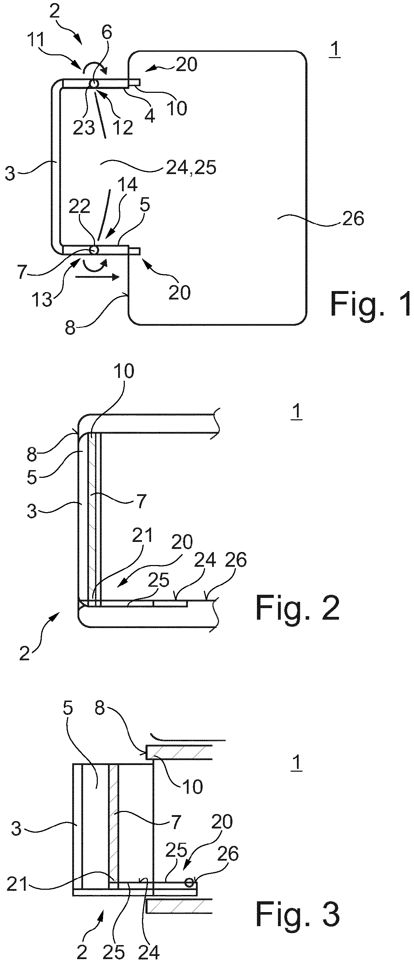

Fig. 1 zeigt ein Freizeitfahrzeug 1, das als Wohnmobil oder Wohnwagen ausgestaltet sein kann, mit einer Raumerweiterung 2 entsprechend einem möglichen Ausführungsbeispiel in einer schematischen, auszugsweisen Ansicht von oben. Ferner zeigt Fig. 2 das Freizeitfahrzeug 1 entsprechend einem möglichen Ausführungsbeispiel in einer schematischen, auszugsweisen Ansicht von der Seite. Fig. 1 zeigt hierbei einen ausgefahrenen Zustand, in dem die Raumerweiterung 2 ausgefahren ist. Fig. 2 zeigt einen Ausgangszustand, in dem die Raumerweiterung 2 eingefahren ist.

Das Freizeitfahrzeug 1 kann beispielsweise auf einem Campingplatz abgestellt werden. Dann kann in vorteilhafter Weise ein Umbau vorgenommen werden, der den Nutzwert des Freizeitfahrzeugs 1 wesentlich erhöht. Hierfür weist das Freizeitfahrzeug 1 die Raumerweiterung 2 auf, wobei auch weitere Raumerweiterungen vorgesehen sein können.

Die Raumerweiterung 2 für das Freizeitfahrzeug 1 umfasst ein ausfahrbares Element 3 und Seitenwände 4, 5. Die Seitenwände 4, 5 sind hierbei auf geeignete Weise mit dem ausfahrbaren Element 3 verbunden. Die Seitenwände 4, 5 sind als flexible Seitenwände 4, 5 ausgebildet. Ferner sind Spindeln 6, 7 vorgesehen. Wenn die Seitenwände 4, 5 in dem Ausgangszustand, in dem das ausfahrbare Element 3 eingefahren ist, aufgerollt sind, dann sind diese vorzugsweise weitgehend in Gehäusen der Spindeln 6, 7 beziehungsweise auf den Spindeln 6, 7 eingerollt, wie es in Fig. 2 gezeigt ist. Das ausfahrbare Element 3, das als plattenförmiges Element 3 ausgebildet sein kann, kann dann im Ausgangszustand ein Teil einer Aufbauwand 8 des Freizeitfahrzeugs 1 bilden beziehungsweise sich in die Aufbauwand 8 einfügen.

Die Spindeln 6, 7 sind bei einem Verstellen des ausfahrbaren Elements 3 aus dem Ausgangszustand in einen ausgefahrenen Zustand, in dem das ausfahrbare Element 3 ausgefahren ist, wie es in Fig. 1 dargestellt ist, mittels einer Teleskopmechanik 20 so betätigbar ist, dass die Spindeln 6, 7 zumindest näherungsweise mittig zwischen dem ausfahrbaren Element 3 und dem Rahmen 10 angeordnet sind. Entsprechendes gilt bei einer Verstellung aus dem ausgefahren Zustand in den Ausgangszustand.

Bei dem Verstellen des ausfahrbaren Elements 3 aus dem ausgefahren Zustand in den Ausgangszustand rollen die Spindeln 6, 7 die Seitenwände 4, 5 ein. Die Spindeln 6, 7 sind vorzugsweise als angetriebene Spindeln 6, 7 ausgebildet. Das ausfahrbare Element 3 wird dann mittels der Seitenwände 4, 5 durch die Spindeln 6, 7 betätigt.

In diesem Ausführungsbeispiel sind die Spindeln 4, 5 mittig zwischen dem ausfahrbaren Element 3 und einem Rahmen 10 angeordnet. Ferner rollen die Spindeln 6, 7 die Seitenwände 4, 5 an jeweils zwei Seiten 11, 12, 13, 14 der Spindeln 6, 7 ein.

Außerdem ist eine Teleskopmechanik 20 vorgesehen, wie es im Folgenden auch unter Bezugnahme auf Fig. 3 weiter erläutert ist.

Fig. 3 zeigt den in Fig. 2 dargestellten Ausschnitt im ausgefahrenen Zustand. Die Spindeln 6, 7 sind durch die Teleskopmechanik 20 gleichmäßig verstellbar. Die Raumerweiterung 2 kann hierbei beispielsweise einen Teleskopboden 24 mit einer Fußbodenplatte 25 aufweisen, die beim Ausfahren der Raumerweiterung 2 mit ausgefahren wird, um eine Nutzung zu ermöglichen. Dann kann der Teleskopboden 24 belastet, insbesondere betreten, werden, um eine Erweiterung zu einem Laufboden 26 zu realisieren. Vorzugsweise sind die Seitenwände 4, 5 in dem ausgefahren Zustand gestreckt.

Wie es in Fig. 2 und 3 exemplarisch an Hand der Spindel 5 gezeigt ist, sind die Spindeln 6, 7 an zumindest einem Ende 21 an der linear geführten Fußbodenplatte 25 gelagert ist. Dann ist eine vorteilhafte Verstellung der flexiblen und einrollbaren Seitenwände 4, 5 der Raumerweiterung 2 möglich. Insbesondere kann eine gesicherte Führung der Seitenwände 4, 5, insbesondere von Stoffwänden 4, 5, erzielt werden, so dass ein Einklemmen und/oder Beschädigen der Stoffbahnen verhindert ist. Somit kann dann der Stoff der jeweiligen Seitenwand 4, 5 ohne Beschädigung gleichmäßig aufgerollt werden. Die Raumerweiterung 2 erhält dadurch eine deutlich verbesserte Lebensdauer. Der Einzug der Raumerweiterung 2 kann allein durch das Aufrollen erfolgen.

Die Seitenwände 4, 5 können auch als aufblasbare Seitenwände 4, 5 ausgebildet sein. Hierfür können die Seitenwände 4, 5 doppelwandig ausgeführt sein. Dann ist durch ein Aufblasen der Seitenwände 4, 5 eine Verstellung des ausfahrbaren Elements 3 aus dem Ausgangszustand in den ausgefahrenen Zustand möglich. Die Seitenwände 4, 5 werden hierfür luftdicht angebunden.

Die Seitenwände 4, 5 können hierbei auch aus einem Dropstichmaterial gebildet sein, bei dem mit Fäden durchzogene Luftkammer vorgesehen sind, so dass ein Aufblasen mit höheren Drücken möglich ist. Dadurch wird eine Versteifung im ausgefahrenen Zustand erzielt.

Die Erfindung ist nicht auf die beschriebenen Ausführungsbeispiele beschränkt.

## Patentansprüche

1. Raumerweiterung (2) für ein Freizeitfahrzeug (1), insbesondere für ein Wohnmobil oder einen Wohnwagen, mit einem ausfahrbaren Element (3) und zumindest einer Seitenwand (4, 5), wobei die Seitenwand (4, 5) mit dem ausfahrbaren Element (3) verbunden ist,
**dadurch gekennzeichnet,**
**dass** die Seitenwand (4, 5) als flexible Seitenwand (4, 5) ausgebildet ist, dass zumindest eine Spindel (6, 7) vorgesehen ist, dass die Seitenwand (4, 5) in einem Ausgangszustand, in dem das ausfahrbare Element (3) eingefahren ist, zumindest im Wesentlichen an der Spindel (6, 7) eingerollt ist und dass bei einem Verstellen des ausfahrbaren Elements (3) aus einem ausgefahren Zustand, in dem das ausfahrbare Element (3) ausgefahren ist, in den Ausgangszustand die Spindel (6, 7) die Seitenwand (4, 5) einrollt.

2. Raumerweiterung nach Anspruch 1,
**dadurch gekennzeichnet,**
**dass** bei dem Verstellen des ausfahrbaren Elements (3) aus dem ausgefahren Zustand in den Ausgangszustand die Spindel (6, 7) das ausfahrbare Element (3) mittels der Seitenwand (4, 5) betätigt.

3. Raumerweiterung nach Anspruch 1 oder 2,
**dadurch gekennzeichnet,**
**dass** die Spindel (4, 5) zumindest näherungsweise mittig zwischen dem ausfahrbaren Element (3) und einem Rahmen (10) angeordnet ist und/oder dass bei einem Verstellen des ausfahrbaren Elements (3) aus einem ausgefahren Zustand in den Ausgangszustand die Spindel (6, 7) die Seitenwand (4, 5) an zwei Seiten (11, 12, 13, 14) der Spindel (6, 7) einrollt.

4. Raumerweiterung nach Anspruch 3,
**dadurch gekennzeichnet,**
**dass** die Spindel (6, 7) bei einem Verstellen des ausfahrbaren Elements (3) aus einem ausgefahren Zustand in den Ausgangszustand beziehungsweise aus dem Ausgangszustand in den ausgefahrenen Zustand mittels einer Teleskopmechanik (20) so betätigbar ist, dass die Spindel (6, 7) zumindest näherungsweise mittig zwischen dem ausfahrbaren Element (3) und dem Rahmen (10) angeordnet ist.

5. Raumerweiterung nach Anspruch 4,
**dadurch gekennzeichnet,**
**dass** die Spindel (6, 7) mittels der Teleskopmechanik (20) gleichmäßig verstellbar ist.

6. Raumerweiterung nach einem der Ansprüche 1 bis 5 ,
**dadurch gekennzeichnet,**
**dass** die Spindel (6, 7) an zumindest einem Ende (21) an einer vorzugsweise linear geführten Platte (25), insbesondere Fußbodenplatte (25), gelagert ist.

7. Raumerweiterung nach einem der Ansprüche 1 bis 6,
**dadurch gekennzeichnet,**
**dass** die Seitenwand (4, 5) als aufblasbare Seitenwand (4, 5) ausgebildet ist und dass das ausfahrbare Element (3) bei einer Verstellung aus dem Ausgangszustand in den ausgefahrenen Zustand durch Aufblasen der Seitenwand (4, 5) verstellbar ist.

8. Raumerweiterung nach einem der Ansprüche 1 bis 7,
**dadurch gekennzeichnet,**
**dass** die Spindel (6, 7) als angetriebene Spindel (6, 7) ausgebildet ist.

9. Raumerweiterung nach einem der Ansprüche 1 bis 8,
**dadurch gekennzeichnet,**
**dass** die Seitenwand (4, 5) in dem ausgefahren Zustand zumindest im Wesentlichen gestreckt ist.

10. Raumerweiterung nach einem der Ansprüche 1 bis 9,
**dadurch gekennzeichnet,**
**dass** zumindest eine weitere Seitenwand (4, 5) und zumindest eine weitere Spindel (6, 7) vorgesehen sind, dass die Spindel (6, 7) und die weitere Spindel (6, 7) zumindest näherungsweise parallel zueinander angeordnet sind, dass die weitere Seitenwand (4, 5) in dem Ausgangszustand zumindest im Wesentlichen an der weiteren Spindel (6, 7) eingerollt ist und dass bei einem Verstellen des ausfahrbaren Elements (3) aus dem ausgefahren Zustand in den Ausgangszustand die Spindel (6, 7) die Seitenwand (4, 5) und die weitere Spindel (6, 7) die weitere Seitenwand (4, 5) zumindest näherungsweise simultan zueinander einrollen.

11. Freizeitfahrzeug (1), insbesondere Wohnmobil oder Wohnwagen, mit zumindest einer Raumerweiterung (2) nach einem der Ansprüche 1 bis 10.
